# EUROPEAN PATENT APPLICATION

(11) **EP 4 371 809 A1**
(43) Date of publication of application: **22.05.2024**
(21) Application number: 22207679.6
(22) Date of filing: 16.11.2022
(51) Int. Cl.: B60L 53/80, B60L 58/12, B60L 58/21, B60W 20/00

(54) **A BATTERY ARRANGEMENT**

(71) Applicant: Volvo Construction Equipment AB, 631 85 Eskilstuna (SE)
(72) Inventor: KVIST, Roland, 363 91 BRAÅS (SE); EKMAN, Gordon, 342 63 MOHEDA (SE); ÖRKENRUD, Kim, 35264 VÄXJÖ (SE)
(74) Representative: Kransell & Wennborg KB

(57) **Abstract**

The present inventive concept relates to a battery arrangement for a vehicle, the battery arrangement comprising a primary high-voltage battery, a secondary high-voltage battery, wherein the primary and second batteries are electrically connected to each other for feeding electric power there between, and a control unit comprising a processor device coupled to the primary and secondary batteries, the processor device being configured to receive data indicative of an upcoming battery replacement event, at which battery replacement event the secondary high-voltage battery will be replaced with an externally charged high-voltage battery, and control one of the primary high-voltage battery and the secondary high-voltage battery to feed electric power to the other one of the primary high-voltage battery and the secondary high-voltage battery prior to replacement of the secondary high-voltage battery.

## Description

### TECHNICAL FIELD

The inventive concept relates generally to vehicle high-voltage batteries. In particular aspects, the inventive concept relates to a battery arrangement for a vehicle. The inventive concept can be applied in heavy-duty vehicles, such as trucks, buses, and construction equipment. Although the inventive concept may be described with respect to a particular vehicle, the disclosure is not restricted to any particular vehicle.

### BACKGROUND

Electrically propelled vehicles are becoming an attractive complement or replacement to conventional ICE propelled vehicles. The electrically propelled vehicle thus comprises at least one electric traction motor configured to generate a tractive force to the wheels of the vehicle during propulsion. The electric traction motor receives electric power from an energy storage system, such as one or more high-voltage batteries.

For working machines, which are relatively heavy and operates at challenging environments, the electric traction motor requires a high level of electric power to be able to operate a desirable distance. The high-voltage batteries may thus need to recharge at regular intervals. Instead of charging the batteries, one solution is to simply replace the battery with a fully charged battery.

However, replacement of batteries requires e.g. a dedicated operator to execute the replacement, which can result in a time consuming replacement event due to e.g. an increasing lead time when several vehicles need to replace their batteries at the same time. There is thus a desire to further improve battery replacements at work sites, etc.

### SUMMARY

According to a first aspect of the inventive concept, there is provided a battery arrangement for a vehicle, the battery arrangement comprising a primary high-voltage battery connectable to an electric traction motor of the vehicle, the primary high-voltage battery being configured to feed electric power to the electric traction motor during propulsion and to receive electric power generated by the electric traction motor during braking, a secondary high-voltage battery connectable to the electric traction motor of the vehicle, the secondary high-voltage battery being configured to feed electric power to the electric traction motor during propulsion and to receive electric power generated by the electric traction motor during braking, wherein the primary and second batteries are electrically connected to each other for feeding electric power there between, and a control unit comprising a processor device coupled to the primary and secondary batteries, the processor device being configured to receive data indicative of an upcoming battery replacement event, at which battery replacement event the secondary high-voltage battery will be replaced with an externally charged high-voltage battery, and control one of the primary high-voltage battery and the secondary high-voltage battery to feed electric power to the other one of the primary high-voltage battery and the secondary high-voltage battery prior to replacement of the secondary high-voltage battery.

The first aspect of the inventive concept may seek to solve the problem associated with battery replacements when one of the batteries is replaced with a new, more charged high-voltage battery. A technical benefit may include that the charge level of the primary high-voltage battery is improved before the replacement event takes place. Thus, the externally charged high-voltage battery replacing the secondary high-voltage battery can be directly used for feeding power to the electric traction motor. Accordingly, the overall charging level of the primary and secondary high-voltage batteries may be improved after the battery replacement event has taken place. Also, the secondary high-voltage battery can be drained from electric energy before the battery replacement event takes place to ensure that the secondary high-voltage battery is depleted to a maximum level, and the primary high-voltage battery is charged to an optimum level.

The upcoming battery replacement event should thus preferably be construed as an operating situation at which the secondary high-voltage battery should be replaced with an externally charged high-voltage battery. Various examples of such battery replacement events will be given below.

In some examples, the primary high-voltage battery may be a stationary, non-replaceable, high-voltage battery. An advantage may be that only a single one of the high-voltage batteries needs to be replaced. By non-replaceable should be construed that the primary high-voltage battery will not be replaced during the battery replacement event, although it can be disconnected from the vehicle during e.g. maintenance, etc.

In some examples, the processor device may be configured to control the secondary high-voltage battery to feed electric power to the primary high-voltage battery prior to replacement of the secondary high-voltage battery. An advantage may be, as also indicated above, that the primary high-voltage battery is charged as much as possible before replacing the secondary high-voltage battery. The overall charging level of the battery arrangement may thus be at a relatively high level after replacing the secondary high-voltage battery with the externally charged high-voltage battery.

In some examples, the processor device may be configured to, before controlling the secondary high-voltage battery to feed electric power to the primary high-voltage battery determine an available state of charge level of the primary high-voltage battery, control the second high-voltage battery to feed electric power to the primary high-voltage battery at a power level below the available state of charge level. An advantage may be that the primary high-voltage battery is charged to a maximum level. When the state of charge level of the primary high-voltage battery reaches the maximum level, and there is available electric power in the secondary high-voltage battery, the processor device may be configured to feed electric power solely from the secondary high-voltage battery to the electric traction motor until the vehicle arrives at the position of the battery replacement event.

In some examples, the battery replacement event may be based on a battery replacement availability at a replacement site. An advantage may be that the vehicle can be instructed to drive to the replacement site when there is an available slot for changing the secondary high-voltage battery. An advantage may thus in turn be that the lead time for replacing high-voltage batteries at the replacement site can be reduced. The secondary high voltage battery may thus be replaced before being depleted or when it actually has a relatively high state of charge level, if it is determined that the replacement of the secondary battery at that point in time is efficient for the lead time at the replacement site.

In some examples, the battery replacement event may be based on a state of charge level of the secondary high-voltage battery. An advantage may be that the secondary high-voltage battery is replaced when its state of charge level is low. Thus, before the battery replacement event takes place, the secondary high-voltage battery is preferably depleted.

In some examples, the data indicative of the battery replacement event may be received in response to the state of charge level of the secondary high-voltage battery being below a predetermined threshold level. An advantage may be that the secondary high-voltage battery can be replaced before being completely depleted.

In some examples, the processor device may be further configured to monitor a status level of the primary high-voltage battery, and control the secondary high-voltage battery to feed electric power to the primary high-voltage battery, wherein a power level of the electric power fed to the primary high-voltage battery is based on the status level of the primary high-voltage battery. An advantage may be that energy management from the secondary high-voltage battery to the primary high-voltage battery can be optimized to fit the status level, i.e. the current status of the primary high-voltage battery.

In some examples, the status level of the primary high-voltage battery may be a current state of charge level of the primary high-voltage battery. An advantage may be that the secondary high-voltage battery feeds electric power to the primary high-voltage battery until the high-voltage battery reaches a predetermined state of charge threshold limit.

In some examples, the status level of the primary high-voltage battery may be a current state of health of the primary high-voltage battery. An advantage may be that the operational lifetime of the primary high-voltage battery can be improved when the power fed from the secondary high-voltage battery is based on the state of health. In particular, the electric power may be fed at different kilowatt-hours in dependence of the state of health of the primary high-voltage battery.

In some examples, the status level of the primary high-voltage battery may be a current temperature level of the primary high-voltage battery. An advantage is that the operational lifetime of the primary high-voltage battery can be improved since the primary high-voltage battery may be susceptible for different power flows based on the temperature level.

According to a second aspect, there is provided a method of controlling a vehicle battery arrangement comprising primary high-voltage battery connected to an electric traction motor of the vehicle and secondary high-voltage battery connected to the electric traction motor of the vehicle, the method comprising determining the presence of an upcoming battery replacement event, controlling one of the primary high-voltage battery and the secondary high-voltage battery to feed electric power to the other one of the primary high-voltage battery and the secondary high-voltage battery, and subsequently replacing the secondary high-voltage battery with an externally charged high-voltage battery.

Effects and features of the second aspect are largely analogous to those described above in relation to the first aspect.

According to a third aspect, there is provided a vehicle comprising an electric traction motor and a battery arrangement of any one of the examples described above in relation to the first aspect.

In some examples, the vehicle may be a working machine operable at a work site.

In some examples, the work site may be a confined area comprising a plurality of working machines.

In some examples, the battery replacement event may be based on a state of charge level of a high-voltage battery connected to at least one of the plurality of working machines.

In some examples, the battery replacement event may be based on a work schedule of an operator at a replacement site.

Further effects and features of the third aspect are largely analogous to those described above in relation to the first aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the inventive concept as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
Fig. 1 is an exemplary illustration of a vehicle in the form of a working machine according to one example,
Fig. 2 is a schematic illustration of a battery arrangement according to one example,
Fig. 3 is an illustration of a work site according to one example,
Fig. 4 is a flow chart of a method of controlling a battery arrangement according to one example, and
Fig. 5 is a schematic diagram of an exemplary computer system for implementing examples disclosed herein, according to one example.

### DETAILED DESCRIPTION

Aspects set forth below represent the necessary information to enable those skilled in the art to practice the inventive concept.

The objective of the inventive concept may be to solve the problem associated with battery replacements when one of the batteries is replaced with a new, more charged high-voltage battery. A technical benefit may include that the charge level of the primary high-voltage battery is improved before the replacement event takes place.

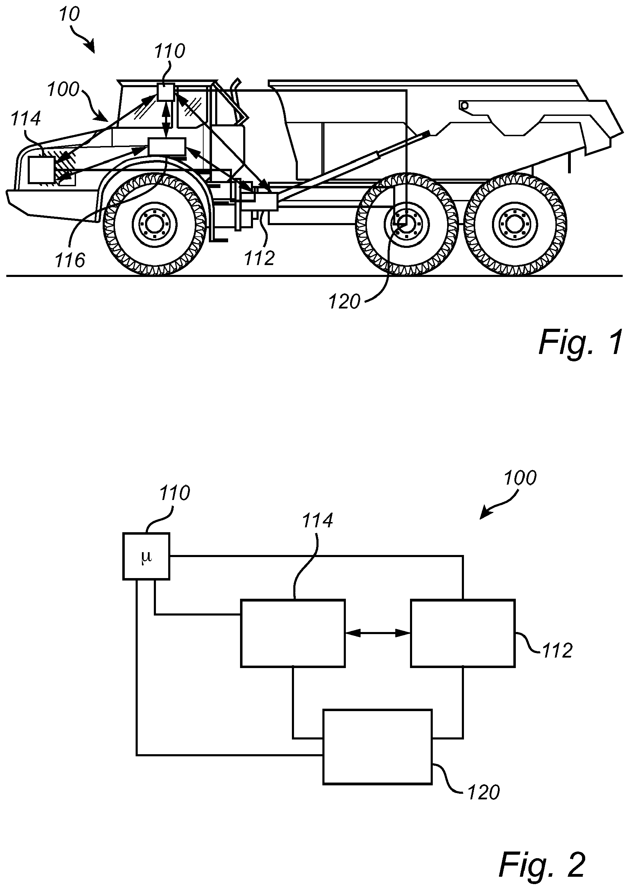

Reference is made to Fig. 1, which is an exemplary illustration of a vehicle 10 in the form of a working machine according to one example. The exemplified working machine is illustrated in the form of an articulated hauler. It should however be readily understood that the present inventive concept may equally as well be provided for other types of working machines and vehicles.

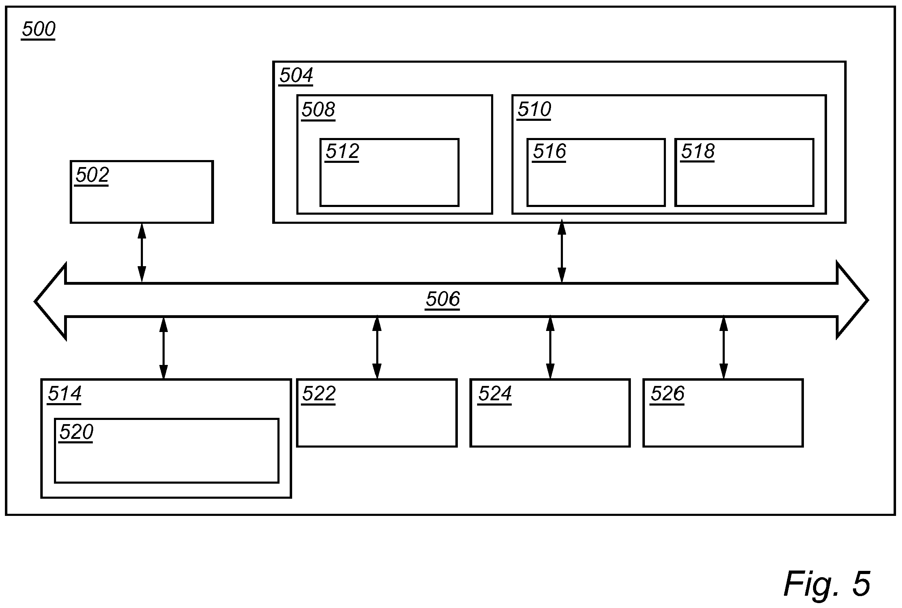

With reference to Fig. 1 in combination with Fig. 2, the vehicle 10 comprises a battery arrangement 100. The battery arrangement 100 comprises a control unit 110. The control unit 110 comprises a processor device which will be described in further detail below with reference to Fig. 5. The vehicle 10 further comprises a primary high-voltage battery 112 and a secondary high-voltage battery 114. The primary high-voltage battery 112 is preferably a stationary, non-replaceable, high-voltage battery. The secondary high-voltage battery 114 on the other hand is preferably a replaceable high-voltage battery. In further detail, the secondary high-voltage battery 114 can be replaced instead of, or as a complement to, conventional electrical charging of a high-voltage battery. The primary 112 and secondary 114 high-voltage batteries may be connected to each other via a DC/DC converter 116 as exemplified in Fig. 1. Electric power can thus be fed between the primary 112 and secondary 114 high-voltage batteries. In further detail, electric power can be fed from the primary high-voltage battery 112 to the secondary high-voltage battery 114, and electric power can be fed from the secondary high-voltage battery 114 to the primary high-voltage battery 112. The control unit 110 is coupled to the primary high-voltage battery 112, the secondary high-voltage battery 114, as well as optionally to the DC/DC converter 116.

Further, the vehicle 10 also comprises an electric traction motor 120. The electric traction motor 120 is electrically connected to each of the primary 112 and secondary 114 high-voltage batteries. The electric traction motor 120 is operable to apply a traction torque on at least one wheel of the vehicle during propulsion. Hence, during propulsion, the primary 112 and secondary 114 high-voltage batteries are configured to feed electric power to the electric traction motor 120. The electric traction motor 120 is also preferably configured to generate electric power, which electric power is fed to at least one of the primary 112 and secondary 114 high-voltage batteries, during braking.

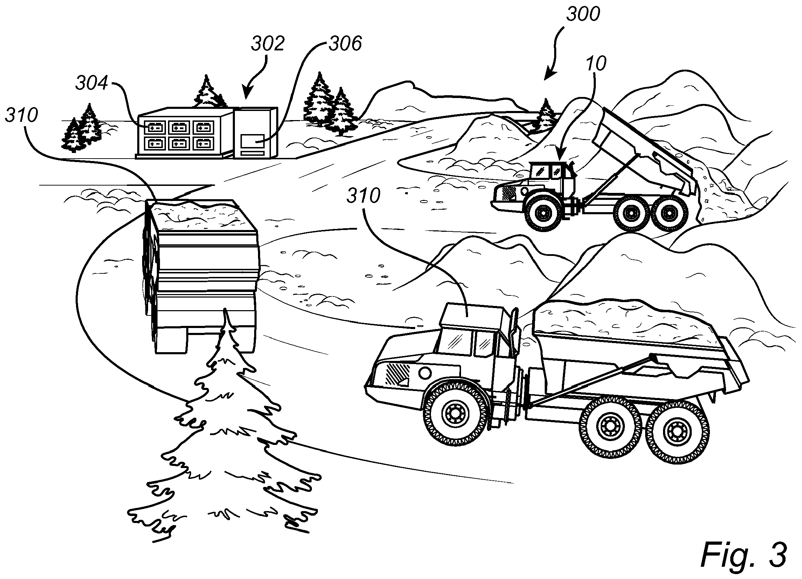

With additional reference to Fig. 3, the vehicle 10 is exemplified as operating at a work site 300. The work site 300 is preferably a confined area comprising a plurality of vehicles, i.e. a plurality working machines 310. The work site 300 preferably comprises a replacement site 302. At the replacement site 302, the secondary high-voltage battery 114 can be replaced with an externally charged high-voltage battery 304. Thus, the replacement site 302 preferably comprises a battery charger 306 for charging high-voltage batteries before being inserted in the vehicle 10. Accordingly, the vehicle 10 may be driven to the replacement site 302 to replace its secondary high-voltage battery 114 with an externally charged high-voltage battery 304. Preferably, an operator at the replacement site 302 can open the hood of the vehicle 10 and remove the secondary high-voltage battery 114 for replacing the secondary high-voltage battery 114 with the externally charged high-voltage battery 304. The replacement event can of course also be automated.

During operation of the vehicle at the work site 300, the processor device receives data indicative of an upcoming battery replacement event, at which battery replacement event the secondary high-voltage battery 114 will be replaced with the externally charged high-voltage battery 304. Before the secondary high-voltage battery 114 is replaced, the processor device controls one of the primary high-voltage battery 112 and the secondary high-voltage battery 114 to feed electric power to the other one of the primary high-voltage battery 112 and the secondary high-voltage battery 114. Preferably, the processor device controls the secondary high-voltage battery 114 to feed electric power to the primary high-voltage battery 112 prior to the replacement of the secondary high-voltage battery 114.

Before controlling the secondary high-voltage battery 114 to feed electric power to the primary high-voltage battery 112, the processor device may determine an available state of charge level of the primary high-voltage battery 112. The second high-voltage battery 114 is thereafter controlled to feed electric power to the primary high-voltage battery 112 at a power level which is below the available state of charge level of the primary high-voltage battery 112.

The processor device may also be configured to monitor a status level of the primary high-voltage battery 112. The status level of the primary high-voltage battery 112 may, for example, be a current state of charge (SoC) level of the primary high-voltage battery 112. According to another example, the status level of the primary high-voltage battery 112 may, for example, be a current state of health (SoH) of the primary high-voltage battery 112. As a further example, the status level of the primary high-voltage battery 112 may be a current temperature level of the primary high-voltage battery 112.

The power level of the electric power fed from the secondary high-voltage battery 114 may preferably be based on the status level of the primary high-voltage battery 112. In particular, and according to an example, the rate at which electric power is fed to the primary high-voltage battery 112 is preferably based on the status level of the primary high-voltage battery 112.

Moreover, the above described battery replacement event may be based on various factors. Put it differently, the processor device may determine that it is suitable to replace the secondary high-voltage battery 114 with an externally charged high-voltage battery 304 for different reasons. Firstly, and according to an example, the battery replacement event may be based on a state of charge level of the secondary high-voltage battery 114. Preferably, the data indicative of the battery replacement event may be received in response to the state of charge level of the secondary high-voltage battery 114 being below a predetermined threshold level.

According to another example, the battery replacement event may be based on a battery replacement availability at a replacement site. Thus, if there are externally charged batteries available at the replacement site, the processor device may determine that it is suitable to replace the secondary high-voltage battery 114. According to another example, a work schedule of an operator at the replacement site 302 may be decisive for determining that the secondary high-voltage battery 114 should be replaced. Accordingly, if there is an operator available for performing the replacement. Also, the battery replacement event may be based on a state of charge level of a high-voltage battery connected to at least one of the plurality of working machines 310. In the latter example, queuing at the replacement site can be avoided.

The processor device may receive data indicative of the above examples and take a decision based on weighted factors to determine if replacement of the secondary high-voltage battery should be made at the replacement site, or if it is more efficient to await such replacement to a later point in time.

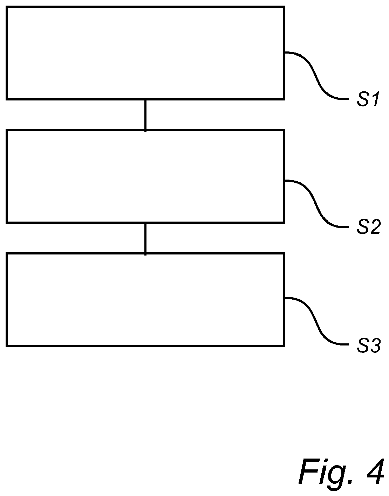

In order to summarize the above, reference is now made to Fig. 4 which is a flow chart of a method of controlling a battery arrangement 100 according to one example. During operation, the processor device determines S1 the presence of an upcoming battery replacement event. The processor circuitry thereafter controls S2 one of the primary high-voltage battery 112 and the secondary high-voltage battery 114 to feed electric power to the other one of the primary high-voltage battery 112 and the secondary high-voltage battery 114. Subsequently, the secondary high-voltage battery 114 is replaced S3 with an externally charged high-voltage battery 304.

Reference is now made to Fig. 5, which is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include a processor device 502 (may also be referred to as a control unit), a memory 504, and a system bus 506. The computer system 500 may include at least one computing device having the processor device 502. The system bus 506 provides an interface for system components including, but not limited to, the memory 504 and the processor device 502. The processor device 502 may include any number of hardware components for conducting data or signal processing or for executing computer code stored in memory 504. The processor device 502 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processor device 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with a processor device 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program product 520 stored on a transitory or non-transitory computer-usable or computer-readable storage medium (e.g., single medium or multiple media), such as the storage device 514, which includes complex programming instructions (e.g., complex computer-readable program code) to cause the processor device 502 to carry out the steps described herein. Thus, the computer-readable program code can comprise software instructions for implementing the functionality of the examples described herein when executed by the processor device 502. The processor device 502 may serve as a controller or control system for the computer system 500 that is to implement the functionality described herein.

The computer system 500 also may include an input device interface 522 (e.g., input device interface and/or output device interface). The input device interface 522 may be configured to receive input and selections to be communicated to the computer system 500 when executing instructions, such as from a keyboard, mouse, touch-sensitive surface, etc. Such input devices may be connected to the processor device 502 through the input device interface 522 coupled to the system bus 506 but can be connected through other interfaces such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may also include a communications interface 526 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery arrangement for a vehicle, the battery arrangement comprising:
- a primary high-voltage battery connectable to an electric traction motor of the vehicle, the primary high-voltage battery being configured to feed electric power to the electric traction motor during propulsion and to receive electric power generated by the electric traction motor during braking,
- a secondary high-voltage battery connectable to the electric traction motor of the vehicle, the secondary high-voltage battery being configured to feed electric power to the electric traction motor during propulsion and to receive electric power generated by the electric traction motor during braking, wherein the primary and second batteries are electrically connected to each other for feeding electric power there between, and
- a control unit comprising a processor device coupled to the primary and secondary batteries, the processor device being configured to:
- receive data indicative of an upcoming battery replacement event, at which battery replacement event the secondary high-voltage battery will be replaced with an externally charged high-voltage battery, and
- control one of the primary high-voltage battery and the secondary high-voltage battery to feed electric power to the other one of the primary high-voltage battery and the secondary high-voltage battery prior to replacement of the secondary high-voltage battery.

2. The battery arrangement of claim 1, wherein the primary high-voltage battery is a stationary, non-replaceable, high-voltage battery.

3. The battery arrangement of claims 1 or 2, wherein the processor device is configured to control the secondary high-voltage battery to feed electric power to the primary high-voltage battery prior to replacement of the secondary high-voltage battery.

4. The battery arrangement of claim 3, wherein the processor device is configured to, before controlling the secondary high-voltage battery to feed electric power to the primary high-voltage battery:
- determine an available state of charge level of the primary high-voltage battery,
- control the second high-voltage battery to feed electric power to the primary high-voltage battery at a power level below the available state of charge level.

5. The battery arrangement of any one of the preceding claims, wherein the battery replacement event is based on a battery replacement availability at a replacement site.

6. The battery arrangement of any one of the preceding claims, wherein the battery replacement event is based on a state of charge level of the secondary high-voltage battery.

7. The battery arrangement of claim 6, wherein the data indicative of the battery replacement event is received in response to the state of charge level of the secondary high-voltage battery being below a predetermined threshold level.

8. The battery arrangement of any one of the preceding claims, the processor device being further configured to:
- monitor a status level of the primary high-voltage battery, and
- control the secondary high-voltage battery to feed electric power to the primary high-voltage battery, wherein a power level of the electric power fed to the primary high-voltage battery is based on the status level of the primary high-voltage battery.

9. The battery arrangement of claim 8, wherein the status level of the primary high-voltage battery is a current state of charge level of the primary high-voltage battery.

10. The battery arrangement of any one of claims 8 or 9, wherein the status level of the primary high-voltage battery is a current state of health of the primary high-voltage battery.

11. The battery arrangement of any one of claims 8 - 10, wherein the status level of the primary high-voltage battery is a current temperature level of the primary high-voltage battery.

12. A method of controlling a vehicle battery arrangement comprising primary high-voltage battery connected to an electric traction motor of the vehicle and secondary high-voltage battery connected to the electric traction motor of the vehicle, the method comprising:
- determining the presence of an upcoming battery replacement event,
- controlling one of the primary high-voltage battery and the secondary high-voltage battery to feed electric power to the other one of the primary high-voltage battery and the secondary high-voltage battery, and subsequently
- replacing the secondary high-voltage battery with an externally charged high-voltage battery.

13. A vehicle comprising an electric traction motor and a battery arrangement of any one of claims 1 - 11.

14. The vehicle of claim 13, wherein the vehicle is a working machine operable at a work site, the work site being a confined area comprising a plurality of working machines, wherein the battery replacement event is based on a state of charge level of a high-voltage battery connected to at least one of the plurality of working machines.

15. The vehicle of claim 14, wherein the battery replacement event is based on a work schedule of an operator at a replacement site.
